# FASCICULE DE BREVET EUROPEEN

(11) **EP 3 081 439 B1**
(45) Date de publication et mention de la délivrance du brevet: **07.02.2018**
(21) Numéro de dépôt: 16162460.6
(22) Date de dépôt: 25.03.2016
(51) Int. Cl.: B60S 1/38

(54) **EMBOUT D EXTREMITE POUR BALAI D ESSUYAGE**
ENDSTÜCK FÜR SCHEIBENWISCHER
END CAP FOR A WIPER

(30) Priorité: 14.04.2015 FR 1553225
(43) Date de publication de la demande: 19.10.2016
(73) Titulaire: Valeo Systèmes d'Essuyage, 78322 Le Mesnil Saint Denis (FR)
(72) Inventeur: POTON, Eric, 63430 Pont du Château (FR); HOUSSAT, Stéphane, 63112 BLANZAT (FR); GAUCHER, Vincent, 63720 ENNEZAT (FR); JOMARD, Olivier, 63170 AUBIERE (FR)
(74) Mandataire: Vincent, Catherine Marie Marguerite

(56) Documents cités:
- EP-A1- 2 821 300
- WO-A1-2014/079488
- US-B2- 8 857 009

## Description

Le domaine de la présente invention est celui des balais d'essuyage utilisés sur les véhicules automobiles. L'invention concerne particulièrement un embout monté à l'extrémité d'un balai d'essuyage ainsi qu'un procédé pour monter un tel embout. L'invention vise également un balai d'essuyage et un système d'essuyage incorporant un tel balai d'essuyage.

Les véhicules automobiles sont couramment équipés de système d'essuie-glace pour assurer un balayage et un lavage du pare-brise et éviter que la vision qu'a le conducteur de son environnement ne soit perturbée. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, de palonniers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur. Dans cette seconde solution, le balai est rattaché au bras tournant de l'essuie-glace par un ensemble constitué d'un connecteur mécanique et d'un adaptateur. Le connecteur mécanique est une pièce qui est sertie directement sur le balai plat, alors que l'adaptateur est une pièce intermédiaire qui permet la fixation du connecteur sur le bras de l'essuie-glace.

Les documents US8857009B2, EP 2 821 300 A1 et WO2014/079488 montrent des balais d'essuyage équipés d'un embout d'extrémité Les 'embouts d'extrémité divulgués dans l'art antérieur souffrent de plusieurs inconvénients.

En premier lieu, on constate que le moyen de verrouillage peut être actionné de manière intempestive, ce qui dans certaines situations conduit à un désaccouplement de l'embout vis-à-vis du balai d'essuyage. Bien que l'accès au moyen de verrouillage soit complexifié, le moyen de verrouillage n'est pas vraiment empêché dans son mouvement.

En second lieu, la liaison mécanique entre le moyen de sécurisation et le support du balai n'est pas suffisamment assurée. Il convient d'élever le niveau de sécurité de cette liaison mécanique.

Le but de la présente invention est donc de résoudre les inconvénients décrits ci-dessus en concevant un embout d'extrémité ou un balai d'essuyage qui comporte un dispositif qui sécurise la fixation du moyen de verrouillage vis-à-vis du support flexible constitutif du balai d'essuyage.

L'invention a donc pour objet un embout d'extrémité pour un balai d'essuyage d'une vitre d'un véhicule comprenant au moins un support flexible ainsi qu'une lame destinée à être appliquée contre la vitre, l'embout comprenant un logement apte à recevoir une partie terminale du support, l'embout comprenant au moins un moyen de verrouillage de la partie terminale du support en position engagée dans le logement, l'embout d'extrémité comprenant une paroi extérieure délimitant l'embout ainsi qu'un orifice d'accès au moyen de verrouillage, le moyen de verrouillage comprenant une portion apte à former une butée longitudinale à l'égard du support flexible, une première face qui s'étend entre le logement et la paroi extérieure et une seconde face en regard de l'orifice, caractérisé en ce que le moyen de verrouillage comprend en outre un bras élastique au bout duquel sont formés la portion et un élément qui prend naissance à la jonction entre la première face et la portion et qui s'étend au moins longitudinalement au-delà de la portion. L'élément est conformé pour bloquer le moyen de verrouillage et ainsi éviter qu'un mouvement malencontreux désaccouple l'embout de la partie terminale du support flexible.

Selon un exemple de l'invention, l'élément forme un bord agencé pour venir en contact avec au moins une face longitudinale du support. C'est par un appui mécanique du bord contre une face du support que le moyen de verrouillage est empêché dans son mouvement, selon au moins un sens de déplacement du moyen de verrouillage.

Le bord ainsi agencé peut être délimité par une surface perpendiculaire, ou sensiblement perpendiculaire, à une face de la portion. Un tel agencement coopère parfaitement avec une arête formée à la jonction de la face du support et de la tranche délimitant une cavité formée dans le support, et qui reçoit le moyen de verrouillage.

Selon l'invention, le moyen de verrouillage comprend un bras élastique au bout duquel sont formés la portion et l'élément. Le bras est qualifié d'élastique en ce sens qu'il peut se déplacer dans une limite garantissant que le bras reprendra sa position initiale. A titre d'exemple, le bras est réalisé en matériau polymère flexible, notamment moulé simultanément avec l'embout d'extrémité.

On notera que le bras élastique peut comprendre une zone sur laquelle est formé au moins un chanfrein. Un tel chanfrein facilite l'insertion du moyen de verrouillage dans la cavité du support.

De manière optionnelle, le bras élastique s'étend selon une première direction et la zone s'étend selon une deuxième direction, la première direction et la deuxième direction étant sensiblement parallèles et distinctes. On comprend ici que le chanfrein est disposé de préférence sur le côté du bras élastique. Une telle solution permet de réduire l'encombrement de l'embout, notamment sa longueur.

Le dispositif selon l'invention peut comprendre le bras élastique déplaçable en rotation autour d'un axe qui s'étend sensiblement parallèlement à un plan selon lequel s'étend majoritairement le logement et perpendiculairement à une direction longitudinale de l'embout. On comprend ici que le bras se déplace selon une direction qui passe par deux faces longitudinales du support flexible.

Le moyen de verrouillage peut former un profil en « L » dans un plan sensiblement parallèle à un plan selon lequel s'étend majoritairement le logement. Une branche du « L » est formée par le bras élastique alors que l'autre branche du « L » est formée par le chanfrein.

L'invention couvre également un balai d'essuyage comprenant au moins un support flexible ainsi qu'une lame destinée à être appliquée contre la vitre, et un embout d'extrémité comprenant un logement apte à recevoir une partie terminale du support, ledit embout comprenant au moins un moyen de verrouillage de la partie terminale du support en position engagée dans le logement par coopération entre le moyen de verrouillage et une cavité ménagée dans le support, ledit embout comprenant un dispositif de sécurisation du moyen de verrouillage qui empêche le déplacement du moyen de verrouillage hors de la cavité, et dans lequel de dispositif de sécurisation comprends un élément qui vient en contact d'au moins une face longitudinale du support flexible, ladite face longitudinale étant en regard d'une paroi extérieure délimitant l'embout d'extrémité, caractérisée en ce que le moyen de verrouillage comprend une première face qui s'étend entre le logement et la paroi extérieure, une seconde face en regard d'un orifice d'accès au moyen de verrouillage et la portion, l'élément prenant naissance à la jonction entre la première face et la portion et s'étend au moins longitudinalement au-delà de la portion, et le moyen de verrouillage comprend un bras élastique au bout duquel sont formés la portion et le dispositif de sécurisation. Le dispositif de sécurisation présente la fonction de bloquer un mouvement du moyen de verrouillage selon un des sens correspondant au sens de déplacement du moyen de verrouillage.

Selon un mode de réalisation, le dispositif de sécurisation limite le déplacement du moyen de verrouillage pour l'empêcher de sortir de la cavité, une fois que le moyen de verrouillage s'est logé dans la cavité. Selon un autre mode de réalisation alternatif ou complémentaire, le dispositif de sécurisation bloque l'accès au moyen de verrouillage.

Selon un exemple de réalisation de l'invention, l'élément forme un bord délimité par une surface sensiblement perpendiculaire à une face de la portion.

Selon un exemple de réalisation, le bras élastique comprend une zone sur laquelle est formé au moins un chanfrein.

Le bras élastique s'étend selon une première direction et la zone s'étend selon une deuxième direction, la première direction et la deuxième direction étant sensiblement parallèles et distinctes.

Selon un autre mode de réalisation, le dispositif de sécurisation comprend une patte issue d'un corps de l'embout et qui couvre le moyen de verrouillage. Il s'agit ici d'une alternative de réalisation de l'élément formant dispositif de sécurisation. L'invention couvre également le cas où le dispositif de sécurisation est formé à la fois par l'élément qui vient au contact d'au moins une face du support flexible qui s'étend longitudinalement et par la patte qui couvre le moyen de verrouillage. Dans l'un ou l'autre des cas, la patte prend naissance sur le corps de l'embout, notamment en étant conjointement moulé avec celui-ci, en vue d'être pliée au-dessus, c'est-à-dire en regard du moyen de sécurisation et ainsi réaliser la fonction dévolue au dispositif de sécurisation.

Dans un tel cas, la patte peut comprendre un pli à la limite de deux portions qui s'étendent chacune dans des plans globalement concourants. Selon un exemple de réalisation, une première portion prenant naissance sur le corps est délimitée par le pli, ce dernier donnant naissance à une seconde portion qui s'étend dans un plan perpendiculaire, ou sensiblement perpendiculaire, par rapport à un plan d'extension de la première portion.

Selon une variante de réalisation unique ou éventuellement complémentaire aux deux modes de réalisation du dispositif de sécurisation décrit ci-dessus, le dispositif de sécurisation peut être formé par au moins un muret qui longe un bord périphérique du moyen de verrouillage.

L'invention vise également un système d'essuyage d'une vitre d'un véhicule comprenant un bras d'entrainement et un balai incorporant l'une quelconque des caractéristiques listées ci-dessus.

L'objet de l'invention est également un procédé de montage d'un balai d'essuyage comprenant au moins un support flexible et au moins un composant rapporté sur le support, et un embout d'extrémité comprenant un logement apte à recevoir une partie terminale du support, ledit embout comprenant au moins un moyen de verrouillage de la partie terminale du support en position engagée dans le logement par coopération entre le moyen de verrouillage et une cavité ménagée dans le support, ledit embout comprenant un dispositif de sécurisation du moyen de verrouillage, procédé dans lequel on enfile l'embout sur la partie terminale du support jusqu'à contraindre longitudinalement le composant de sorte à ce que le dispositif de sécurisation passe dans la cavité. Une telle contrainte est nécessaire pour autoriser le franchissement de la cavité par le dispositif de sécurisation de manière à ce que celui-ci puisse se positionner sur le support et ainsi empêcher un actionnement intempestif du moyen de verrouillage.

Selon une étape supplémentaire de ce procédé, on relâche la contrainte de sorte à ce qu'un élément du dispositif de sécurisation vienne au contact d'au moins une face longitudinale du support.

De manière alternative ou complémentaire au procédé visé ci-dessus, on peut prévoir un procédé de montage d'un balai d'essuyage comprenant au moins un support flexible et au moins un composant rapporté sur le support, et un embout d'extrémité comprenant un logement apte à recevoir une partie terminale du support, ledit embout comprenant au moins un moyen de verrouillage de la partie terminale du support en position engagée dans le logement, ledit embout comprenant un dispositif de sécurisation du moyen de verrouillage, procédé dans lequel on enfile l'embout sur la partie terminale du support jusqu'à coopération entre le moyen de verrouillage et une cavité ménagée dans le support puis on déforme le dispositif de sécurisation, notamment au moins une patte, issu d'un corps de l'embout jusqu'à ce que le dispositif de sécurisation couvre le moyen de verrouillage. Un tel procédé requiert une opération supplémentaire, ce qui permet de valider positivement que le moyen de verrouillage est bien empêché dans son mouvement.

Un tout premier avantage selon l'invention réside dans l'impossibilité de déverrouiller le moyen de verrouillage de manière intempestive. On augmente ainsi très nettement le niveau de sécurisation de l'assemblage de l'embout sur l'extrémité du balai d'essuyage. Les différents composants constitutifs du balai d'essuyage comme par exemple le ou les déflecteurs d'air sont donc indémontables et ne peuvent être retirés du balai d'essuyage sans endommager celui-ci.

En outre, l'invention offre une sureté de montage accrue comparée au dispositif de l'art antérieur. Elle permet aussi de s'affranchir des problèmes de tolérances de fabrication et de montage du moyen de verrouillage. Enfin, l'invention permet globalement d'effectuer un meilleur contrôle qualité sur la ligne de montage du balai d'essuyage.

D'autres caractéristiques, détails et avantages de l'invention ressortiront plus clairement à la lecture de la description donnée ci-après à titre indicatif en relation avec des dessins dans lesquels :
- la figure 1 est une vue générale, en perspective, d'un balai d'essuyage selon l'invention,
- la figure 2 est une vue en perspective d'un embout d'extrémité selon l'invention,

- la figure 3 est une vue en perspective de face de l'embout d'extrémité selon la figure 2,
- la figure 4 est une vue en perspective de dessous de l'embout d'extrémité selon la figure 2,
- la figure 5 est un agrandissement d'un détail V de la figure 4,
- la figure 6 est une vue en coupe selon VI-VI de la figure 4, où les parois coupées ont été représentées en transparence,
- la figure 7 est une vue en coupe de l'embout d'extrémité selon la figure 2 monté sur un support flexible constitutif d'un balai d'essuyage,
- la figure 8 est une vue en perspective du dessous d'un embout d'extrémité selon une alternative de réalisation.

Il faut tout d'abord noter que les figures exposent l'invention de manière détaillée pour mettre en oeuvre l'invention, lesdites figures pouvant bien entendu servir à mieux définir l'invention le cas échéant.

Dans la suite de la description, les dénominations longitudinales ou latérales, dessus, dessous, devant, derrière se réfèrent à l'orientation du balai d'essuyage ou de l'embout d'extrémité selon l'invention. La direction longitudinale correspond à l'axe principal du balai d'essuyage dans lequel il s'étend, alors que les orientations latérales correspondent à des droites concourantes, c'est-à-dire qui croisent la direction longitudinale, notamment perpendiculaires à l'axe longitudinal du balai d'essuyage dans son plan de rotation. Pour les directions longitudinales, les dénominations extérieure ou intérieure s'apprécient par rapport au point de fixation du balai d'essuyage sur un bras d'entrainement en rotation de ce balai, la dénomination intérieure correspondant à la partie où le bras et un demi-balai s'étendent. Enfin, les directions référencées comme supérieures ou inférieures correspondent à des orientations perpendiculaires au plan de rotation du balai d'essuyage, la dénomination inférieure contenant le plan du pare-brise.

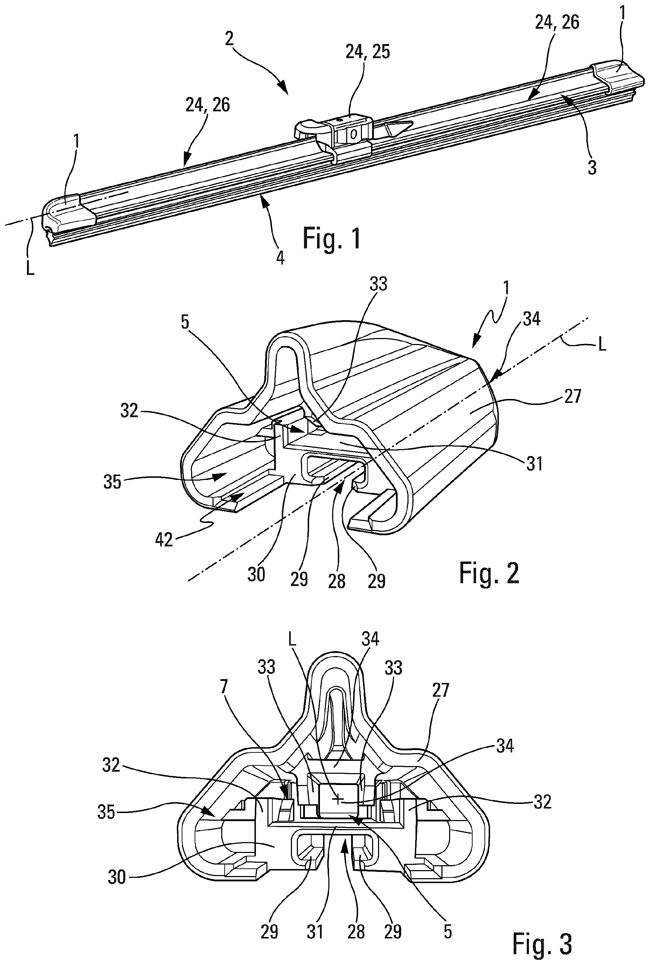

En se référant tout d'abord à la figure 1, on voit un balai d'essuyage 2 selon l'invention. Un tel balai d'essuyage 2 est utilisé pour racler une vitre d'un véhicule et déplacer hors du champ de vision d'un conducteur l'eau déposée sur cette vitre. Le balai d'essuyage 2 est constitué d'au moins un support flexible 3, un composant 24, une lame de frottement 4 et au moins un, voire deux, embouts d'extrémité 1 installés sur chaque partie terminale du support flexible 3. Le support flexible 3 est un support longitudinal.

Le support flexible 3 peut prendre la forme d'une unique bande métallique plate et élastique. Selon une alternative, le support flexible 3 peut être formé par deux bandes métalliques et élastiques logées chacune dans une rainure ménagée de part et d'autre de la lame 4. Dans les deux cas ci-dessus, à l'état de repos, une telle bande métallique est courbée selon un plan perpendiculaire à une direction longitudinale de la bande. La fonction d'une telle bande métallique, qu'elle soit unique ou double, est de répartir les efforts d'appui le long de la lame 4 générés par un moyen de connexion 25 attaché au support flexible au centre, longitudinalement, du balai d'essuyage 2.

Le composant 24 désigne plusieurs types de pièce constitutive du balai d'essuyage 2. Il peut s'agir du moyen de connexion 25 destiné à relier le balai d'essuyage à un bras d'entraînement en rotation de ce balai. Il peut également s'agir d'un ou plusieurs déflecteurs d'air 26 rapportés sur le support flexible 3 et dont la fonction est de transformer le flux d'air passant sur le balai d'essuyage en une force d'appui qui plaque la lame 4 contre la vitre.

Le balai d'essuyage 2 comprend encore deux embouts d'extrémité 1 de constitution identique, telle que décrite ci-dessous en référence aux figures 2 à 8.

Les figures 2 et 3 montrent en perspective l'embout d'extrémité 1. Un tel embout d'extrémité 1 présente une fonction de maintien mécanique des composants constitutifs du balai d'essuyage 2. Cette embout d'extrémité 1 présente également une fonction esthétique puisqu'il permet de couvrir proprement et ainsi cacher l'extrémité de la lame 4, l'extrémité du support flexible 3 et l'extrémité du composant 24, notamment le déflecteur d'air 26.

L'embout d'extrémité 1 présente une paroi extérieure 27 globalement complémentaire au profil extérieur du déflecteur d'air 26. A l'intérieur d'un volume interne 42 délimité par la paroi extérieure 27, l'embout d'extrémité 1 comprend un logement 5 de réception de la partie terminale du support flexible, non représentée sur cette figure. L'embout d'extrémité 1 comprend encore une rainure 28 dont la fonction est de retenir mécaniquement un talon de la lame 4. Une telle rainure 28 est formée dans un corps 30 de l'embout d'extrémité 1, en particulier dans une partie inférieure de ce corps. Cette rainure 28 est ouverte vers l'extérieur, cette ouverture étant délimitée par deux crochets 29 qui s'étendent longitudinalement le long de l'embout d'extrémité 1.

Le logement 5 est formé dans le corps 30 de l'embout d'extrémité, entre la rainure 28 et la paroi extérieure 27, vu selon une direction perpendiculaire à un plan d'extension de la rainure 28. Le logement 5 est délimité par une paroi de fond 31 et au moins deux bords latéraux 32, ainsi que par au moins un flanc 33, et notamment deux flancs 33. Ces flancs 33 sont formés chacun par une nervure issue de matière avec la paroi extérieure 27. Ces flancs 33 sont reliés entre eux par un pont de matière 34. Les flancs 33 s'étendent dans des plans perpendiculaires à un plan dans lequel s'étend la paroi de fond 31, et ainsi parallèles à des plans d'extension des bords latéraux 32.

L'embout d'extrémité 1 comprend une partie arrière 41 qui ferme le volume intérieur 42 de l'embout au moyen de la paroi extérieure 27. A l'extrémité opposée par rapport au logement 5 selon la direction longitudinale L, l'embout d'extrémité 1 est ouvert et la paroi extérieure 27 délimite une zone de réception 35. Cette dernière reçoit notamment au moins un des composants du balai d'essuyage, et par exemple une extrémité du déflecteur d'air qui vient se loger dans la zone de réception 35.

L'embout d'extrémité 1 comprend encore un moyen de verrouillage 7 visible sur la figure 3. Il s'agit d'un moyen dont la fonction est d'assurer la retenue de l'embout d'extrémité 1 sur le balai d'essuyage selon la direction longitudinale, pour l'empêcher de partir vers l'extérieur du balai, selon la direction longitudinale de celui-ci. Ce moyen de verrouillage 7 prend par exemple la forme d'une dent destinée à se loger dans une cavité formée sur ou dans le support flexible.

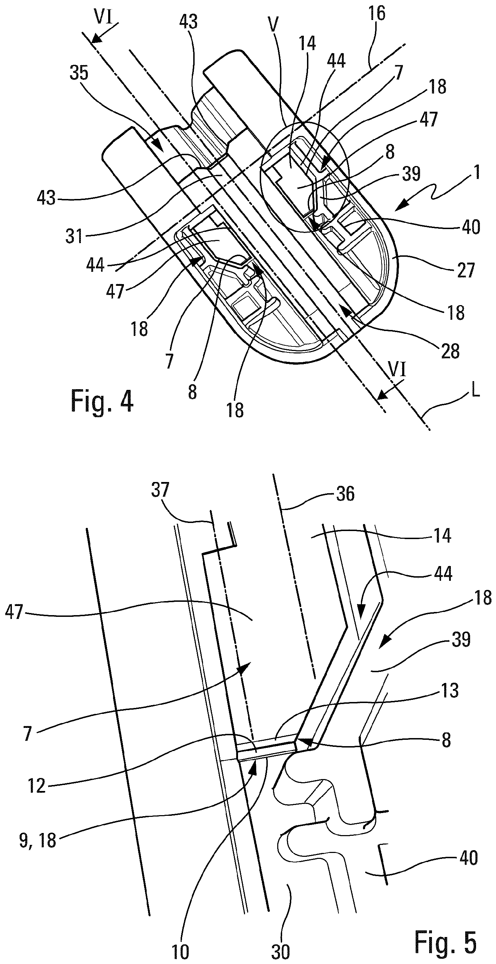

Les figures 4 à 7 montrent plus en détails ce moyen de verrouillage 7. Sur la figure 4, l'embout d'extrémité 1 est ici visible du dessous, la rainure 28 et la zone de réception 35 étant ainsi ouverte vers une face inférieure de l'embout d'extrémité 1.

Le moyen de verrouillage 7 comprend un bras élastique 14 qui prend naissance sur le corps de l'embout d'extrémité 1. Ce bras élastique 14, autrement appelé languette flexible, se déplace en rotation autour d'un axe 16. Ce dernier est parallèle, ou sensiblement parallèle, à un plan dans lequel s'étend le logement qui reçoit la partie terminale du support flexible. Cet axe 16 est également perpendiculaire, ou sensiblement perpendiculaire, à la direction longitudinale L de l'embout d'extrémité 1. On comprend ici que le bras élastique se déplace soit vers un orifice d'accès 44 ménagé dans la face inférieure de l'embout d'extrémité 1, soit vers la paroi extérieure 27 de celui-ci. Pris dans un autre référentiel, le bras élastique 14 se déplace soit vers la lame 4 du balai d'essuyage 2, soit vers un sommet du déflecteur d'air 26 (figure 1), selon une charnière formée par l'axe 16.

Le moyen de verrouillage 7 comprend une portion 8 apte à former une butée longitudinale à l'égard du support flexible. Quand l'embout d'extrémité 1 est enfilé sur la partie terminale du support flexible, cette portion 8 coopère avec une cavité formée dans le support de sorte à bloquer selon un sens le mouvement longitudinale entre l'embout d'extrémité 1 et le balai d'essuyage. Cette portion 8 vient ainsi en appui contre une tranche du support flexible qui délimite la cavité.

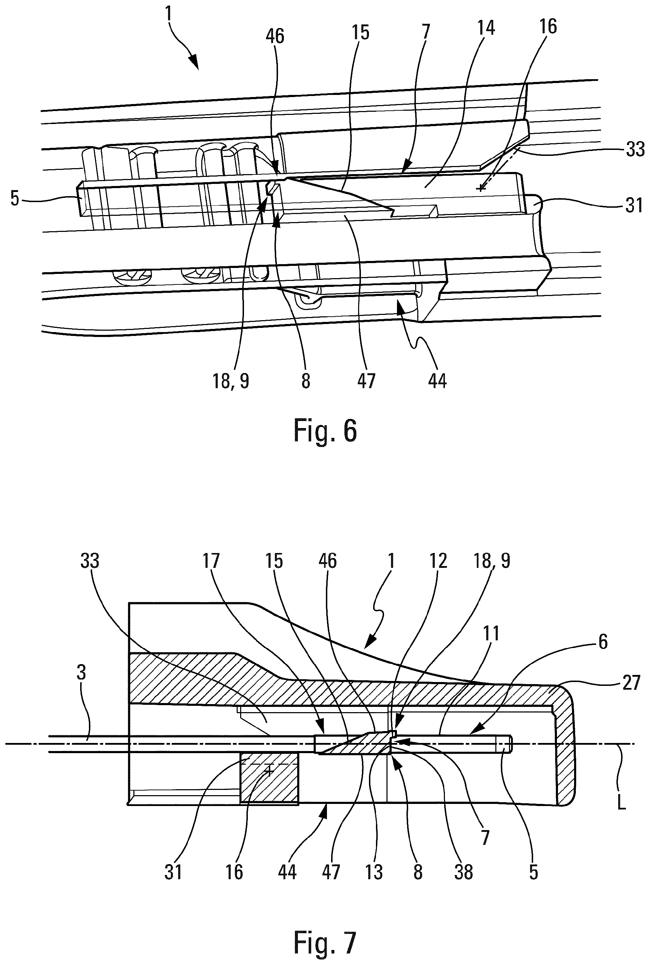

Le moyen de verrouillage 7 est également délimité par une première face 46 (figure 7) qui s'étend entre le logement 5 et la paroi extérieure 27. On comprend ici que cette première face 46 s'étend au-delà du logement 5, en direction de la paroi extérieure 27 délimitant l'embout d'extrémité 1. Le moyen de verrouillage 7 est encore délimité par une seconde face 47 qui est en regard de l'orifice d'accès 44. En d'autres termes, cette seconde face est visible depuis l'extérieur de l'embout en l'observant par le dessous.

Le moyen de verrouillage 7 forme un profil en « L », vu dans un plan sensiblement parallèle à un plan dans lequel s'étend majoritairement le logement 5, une branche du « L » s'étendant parallèlement à la direction longitudinale L de l'embout d'extrémité 1 alors qu'une second branche du « L » s'étend perpendiculairement à la direction longitudinale L de l'embout d'extrémité 1, ou dit autrement, parallèlement à l'axe 16.

La figure 4 montre deux moyens de verrouillage 7 formés symétriquement par rapport à un plan longitudinal médian passant notamment par un sommet de l'embout. Au moins un de ces moyens de verrouillage, voire les deux, comprend un dispositif de sécurisation 18. La fonction de ce dispositif de sécurisation 18 est de limiter le débattement, autrement dit le mouvement, du moyen de verrouillage 7 selon au moins un de ses sens de déplacement lors du montage de l'embout d'extrémité 1 sur la partie terminale du support flexible. On limite ainsi le risque d'actionnement intempestif et on empêche le démontage du balai d'essuyage.

En outre comme illustré sur la figure 4, chaque crochet 29 présente de préférence une extrémité libre biseautée 43 afin de faciliter l'introduction de la rainure 28 autour d'un talon de la lame, lorsque l'embout d'extrémité 1 est enfilé sur la partie terminale 6 du support flexible 3.

Au niveau de l'embout d'extrémité 1, le dispositif de sécurisation 18 prend la forme d'un élément 9, formé sur le moyen de verrouillage 7 et qui s'étend au moins longitudinalement à une extrémité libre du moyen de verrouillage 7 et/ou du bras élastique 14. L'élément 9 prend naissance à la jonction entre la première face 46 et la portion 8, plus particulièrement au niveau d'une face 13 constitutive de la portion 8. La jonction visée ici est sensiblement la zone où une arête serait formée entre la face 46 et la portion 8, en l'absence d'élément 9.

La figure 5 montre le détail référencé V sur la figure 4 illustrant un exemple de réalisation du dispositif de sécurisation 18 selon l'invention. Celui-ci prend par exemple la forme d'un élément 9 qui s'étend au-delà de la portion 8. En d'autres termes, l'élément 9 déborde ou dépasse de la portion 8 selon la direction d'un axe longitudinal L et en direction de la partie fermée de l'embout d'extrémité 1. L'élément 9 forme par exemple un bord 10 agencé pour venir en contact avec au moins une face longitudinale du support flexible, c'est-à-dire l'une des grandes faces qui illustrent le caractère plan et en bande du support flexible.

On notera que ce bord 10 est délimité par une surface 12 sensiblement perpendiculaire à une face 13 de la portion 8. La face 13 est celle qui vient en contact avec la tranche de la cavité formée dans le support flexible, alors que la surface 12 est celle qui vient contre la face longitudinale du support flexible, bloquant ainsi le mouvement du bras élastique 14.

La figure 5 met également en valeur le décalage latéral entre le bras élastique et un chanfrein 15 facilitant l'insertion du moyen de verrouillage. Au bout du bras élastique 14, sont formés la portion 8 et le dispositif de sécurisation 18, notamment l'élément 9. Le bras élastique 14 comprend une zone sur laquelle est formé au moins le chanfrein 15. Ce chanfrein 15 permet la génération d'un mouvement du bras élastique permettant au moyen de verrouillage 7 de s'escamoter pendant le montage de l'embout d'extrémité 1 sur la partie terminale du support flexible.

La figure 6 montre une section de l'embout d'extrémité 1 où les parois coupées ont été volontairement représentées en transparence, pour voir des caractéristiques positionnées derrière ces parois. Selon un exemple de réalisation, on constate sur la figure 6 que le chanfrein 15 et le bras élastique 14 sont décalés latéralement l'un par rapport à l'autre. On a représenté sur la figure 5 une première direction 36 qui correspond à une direction d'extension longitudinale du bras élastique 14, ainsi qu'une deuxième direction 37 qui correspond à la direction longitudinale d'extension du chanfrein 15. Cette première direction 36 et cette deuxième direction 37 sont distinctes, et notamment sensiblement parallèles.

On notera que le dispositif de sécurisation 18 s'étend transversalement à cheval sur une partie délimitée par le chanfrein 15 et sur une partie délimitée par le bras élastique 14.

La figure 7 montre la coopération entre le moyen de verrouillage 7, le dispositif de sécurisation 18 et le support flexible 3. Le logement 5 reçoit la partie terminale 6 du support flexible 3 entre la paroi de fond 31 et les nervures 33. Il est également ménagé au moins une cavité 17 dans cette partie terminale 6. Cette cavité 17 traverse de part en part la partie terminale. Selon un exemple de réalisation, la cavité forme un trou entouré par la partie terminale. De manière alternative, la cavité 17 peut prendre la forme d'une encoche réalisée sur le bord de la partie terminale 6 du support flexible 3.

Comme évoqué plus haut, la face 13 de la portion 8 est au contact d'une tranche 38 de la cavité 17, ce qui permet de mettre en oeuvre le moyen de verrouillage 7. Le dispositif de sécurisation 18 de ce moyen de verrouillage est actif dès lors que la surface 12 est en contact avec la face longitudinale 11 du support flexible 3. Le bras élastique 14, invisible sur cette figure en raison de son décalage avec le chanfrein 15, tourne autour de l'axe 16.

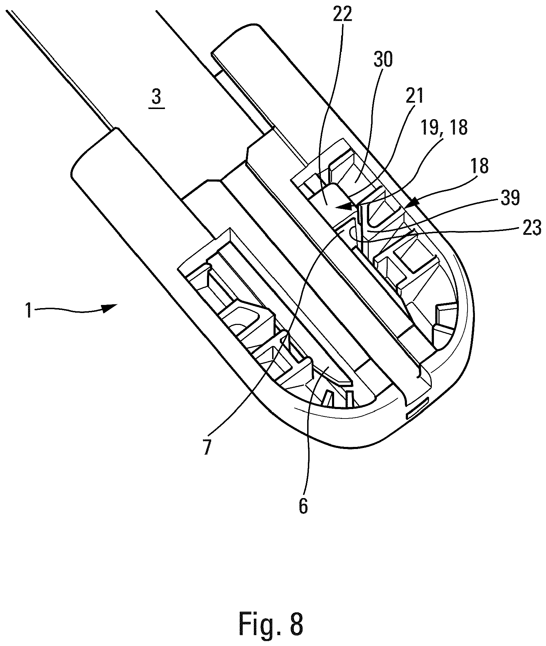

La figure 8 montre une variante de réalisation du dispositif de sécurisation, qui peut être utilisée seule, c'est-à-dire en remplacement de l'élément 9, ou en combinaison avec celui-ci, de manière à augmenter le niveau de sécurité du moyen de verrouillage. Le dispositif de sécurisation 18 prend ici la forme d'une patte 19 issue du corps 30 de l'embout d'extrémité 1. Cette patte 19 est moulée simultanément avec le reste de l'embout d'extrémité 1 et elle présente la possibilité d'être pliée après introduction de la partie terminale 6 du support flexible 3. La patte 19 comprend ainsi un pli 21 à la limite de deux portions 22 et 23 qui s'étendent chacune selon des plans globalement concourants, et par exemple perpendiculaires. La sécurisation du moyen de verrouillage 7 est obtenue dès lors que le dispositif de sécurisation 18 couvre et rend ainsi inaccessible le bras élastique du moyen de verrouillage 7.

Un autre mode de réalisation du dispositif de sécurisation 18 est illustré aux figures 4, 5 et 8. Comme pour le mode de réalisation décrit ci-dessus, ce mode de réalisation du dispositif de sécurisation 18 peut être utilisé seul, c'est-à-dire en remplacement de l'élément 9 et/ou de la patte 19, ou en combinaison avec l'une et/ou l'autre de ces parties.

Le dispositif de sécurisation 18 prend la forme d'au moins un muret 39 issu de matière avec le corps 30 de l'embout d'extrémité 1. Si on se reporte aux figures 4 et 5, on constate que le muret 39 est formé de manière latérale au moyen de verrouillage 7, c'est-à-dire sur le côté de celui-ci. Le muret 39 s'étend perpendiculairement par rapport au plan d'extension du logement 5. Dans l'exemple des figures 4 et 5, le muret 39 suit le profil du bras élastique 14 sur trois côtés de celui-ci, c'est-à-dire le long de son bord périphérique. Dans la variante de la figure 8, la partie 23 de la patte 19 précédemment décrite forme une partie du muret 39. Le muret 39 est ainsi à proximité immédiate du moyen de verrouillage 7 et empêche ainsi de passer un outil pour celui ou celle qui souhaiterait actionner le bras élastique 14.

L'embout d'extrémité 1 comprend encore un ensemble de renforts 40 issus de matière avec le corps 30 à l'intérieur du volume délimité par la paroi extérieure 27.

Les procédés de montage d'un balai d'essuyage équipé d'un embout d'extrémité vont maintenant être décrits.

Selon un premier procédé, le balai d'essuyage 2 comprend au moins un support flexible 3 et au moins un composant 24 rapporté sur le support flexible 3. Selon un exemple de réalisation, le composant 24 peut être un ou des déflecteurs d'air 26 ou un moyen de connexion 25 destiné à relier mécaniquement le balai d'essuyage 2 à un bras d'entraînement en rotation. Le balai d'essuyage 2 mis en oeuvre dans ce procédé comprend encore un embout d'extrémité 1 avec un logement 5 qui reçoit une partie terminale 6 du support flexible 3. L'embout d'extrémité 1 comprend également au moins un moyen de verrouillage 7 de la partie terminale 6 du support flexible 3 en position engagée dans le logement 5 après que celle-ci fut engagée dans logement 5. Ce verrouillage intervient par coopération entre le moyen de verrouillage 7 et une cavité 17 ménagée dans ou sur le support flexible 3.

L'embout d'extrémité 1 comprend un dispositif de sécurisation 18 du moyen de verrouillage 7 dont la fonction est de limiter la possibilité de manoeuvre intempestive du moyen de verrouillage 7.

Selon une étape du procédé, on enfile l'embout d'extrémité 1 sur la partie terminale 6 du support flexible 3. De manière innovante, on contraint longitudinalement le composant 24 de sorte à ce que le dispositif de sécurisation 18, notamment l'élément 9, passe dans la cavité 17. L'étape de contrainte est rendue possible par exemple en utilisant les jeux de fonctionnement et les tolérances de fabrication du ou des composants 24, ou en déformant celui-ci en particulier dans la direction longitudinale du balai d'essuyage 2. On permet ainsi à l'élément 9 de franchir la cavité 17 pour venir se positionner sur la face 11 du support flexible 3. L'élasticité du composant, notamment le ou les déflecteurs d'air 26, garantit une force qui plaque la portion 8 contre la tranche 38 de la cavité 17 et ainsi un bon positionnement du dispositif de sécurisation 18 sur le support flexible 3.

Selon un deuxième procédé de montage, qui peut remplacer le premier procédé de montage ou se combiner avec celui-ci comme une étape supplémentaire au premier procédé, on réalise sur le balai d'essuyage précédemment décrit une étape au cours de laquelle on enfile l'embout d'extrémité 1 sur la partie terminale 6 du support flexible 3 jusqu'à coopération entre le moyen de verrouillage 7 et une cavité 17 ménagée dans le support flexible 3. Ce second procédé prévoit que l'on déforme le dispositif de sécurisation 18, notamment la patte 19, issu du corps 30 de l'embout d'extrémité 1 jusqu'à ce que le dispositif de sécurisation 18, notamment la patte 19, couvre le moyen de verrouillage 7. On bloque ainsi l'accès au moyen de verrouillage de manière à rendre indémontable le balai d'essuyage.

## Revendications

1. Embout d'extrémité (1) pour un balai d'essuyage (2) d'une vitre d'un véhicule comprenant au moins un support flexible (3) ainsi qu'une lame (4) destinée à être appliquée contre la vitre, l'embout d'extrémité (1) comprenant:
- un logement (5) apte à recevoir une partie terminale (6) du support flexible (3),
- au moins un moyen de verrouillage (7) de la partie terminale (6) du support flexible (3) en position engagée dans le logement (5),
- une paroi extérieure (27) délimitant l'embout (1) ainsi qu'un orifice d'accès (44) au moyen de verrouillage (7),
le moyen de verrouillage (7) comprenant
- une portion (8) apte à former une butée longitudinale à l'égard du support flexible (3),
- une première face (46) qui s'étend entre le logement (5) et la paroi extérieure (27) et
- une seconde face (47) en regard de l'orifice (44),
**caractérisé en ce que** le moyen de verrouillage (7) comprend en outre un bras élastique (14) au bout duquel sont formés la portion (8) et un élément (9) qui prend naissance à la jonction entre la première face (46) et la portion (8) et qui s'étend au moins longitudinalement au-delà de la portion (8).

2. Embout selon la revendication 1, dans lequel l'élément (9) forme un bord (10) agencé pour venir en contact avec au moins une face longitudinale (11) du support flexible (3).

3. Embout selon la revendication 2, dans lequel le bord (10) est délimité par une surface (12) sensiblement perpendiculaire à une face (13) de la portion (8).

4. Embout selon l'une quelconque des revendications précédentes, dans lequel le bras élastique (14) est déplaçable en rotation autour d'un axe (16) qui s'étend sensiblement parallèlement à un plan dans lequel s'étend majoritairement le logement et perpendiculairement à une direction (L) longitudinale de l'embout d'extrémité (1).

5. Embout selon l'une quelconque des revendications 4 à 5, dans lequel le moyen de verrouillage (7) forme un profil en « L » dans un plan sensiblement parallèle à un plan dans lequel s'étend majoritairement le logement (5).

6. Balai d'essuyage (2) comprenant au moins un support flexible (3) ainsi qu'une lame (4) destinée à être appliquée contre la vitre, et un embout d'extrémité (1) comprenant un logement (5) apte à recevoir une partie terminale (6) du support flexible (3), ledit embout d'extrémité (1) comprenant au moins un moyen de verrouillage (7) de la partie terminale (6) du support flexible (3) en position engagée dans le logement (5) par coopération entre le moyen de verrouillage (7) et une cavité (17) ménagée dans le support flexible (3), l'embout d'extrémité (1) comprenant de plus un dispositif de sécurisation (18) du moyen de verrouillage (7) qui empêche le déplacement du moyen de verrouillage (7) hors de la cavité (17) et une portion (8) formant butée longitudinale en appui dans la cavité (17), et dans lequel le dispositif de sécurisation (18) comprend un élément (9) qui vient au contact d'au moins une face longitudinale (11) du support flexible (3), ladite face longitudinale (11) étant en regard d'une paroi extérieure (27) délimitant l'embout d'extrémité (1), **caractérisé en ce que** le moyen de verrouillage (7) comprend une première face (46) qui s'étend entre le logement (5) et la paroi extérieure (27), une seconde face (47) en regard d'un orifice d'accès (44) au moyen de verrouillage (7) et la portion (8), l'élément (9) prenant naissance à la jonction entre la première face (46) et la portion (8) et s'étend au moins longitudinalement au-delà de la portion (8), et **en ce que** le moyen de verrouillage (7) comprend un bras élastique (14) au bout duquel sont formés la portion (8) et le dispositif de sécurisation (18).

7. Balai selon la revendication 6, dans lequel l'élément (9) forme un bord (10) délimité par une surface (12) sensiblement perpendiculaire à une face (13) de la portion (8).

8. Balai selon la revendication 6 ou 7, dans lequel le bras élastique (14) est déplaçable en rotation autour d'un axe (16) qui s'étend sensiblement parallèlement à un plan dans lequel s'étend majoritairement le logement (5) et perpendiculairement à une direction longitudinale (L) de l'embout d'extrémité (1).

9. Balai selon l'une quelconque des revendications 6 à 8, dans lequel le dispositif de sécurisation (18) comprend une patte (19) issue d'un corps (30) de l'embout d'extrémité (1) et qui couvre le moyen de verrouillage (7).

10. Balai selon la revendication 9, dans lequel la patte (19) comprend un pli (21) à la limite de deux portions (22, 23) qui s'étendent chacune selon dans des plans globalement concourants.

11. Balai selon l'une quelconque des revendications 6 à 10, dans lequel le dispositif de sécurisation (18) comprend au moins un muret (39) qui longe un bord périphérique du moyen de verrouillage (7).

12. Système d'essuyage d'une vitre d'un véhicule comprenant un bras et un balai d'essuyage (2) selon l'une quelconque des revendications 6 à 11.

13. Procédé de montage d'un balai d'essuyage (2) comprenant au moins un support flexible (3), au moins un composant (24) rapporté sur le support flexible (3), et un embout d'extrémité (1) selon l'une des revendications 1 à 5, procédé dans lequel on enfile l'embout d'extrémité (1) sur la partie terminale (6) du support flexible (3) jusqu'à contraindre longitudinalement le composant (24) de sorte à ce que le dispositif de sécurisation (18) passe dans la cavité (17).

14. Procédé selon la revendication 17, dans lequel on relâche la contrainte de sorte à ce qu'un élément (9) du dispositif de sécurisation (18) vienne au contact d'au moins une face longitudinale (11) du support flexible (3).

15. Procédé de montage d'un balai d'essuyage (2) comprenant au moins un support flexible (3), au moins un composant (24) rapporté sur le support flexible (3), et un embout d'extrémité (1) selon l'une des revendications 1 à 5, procédé dans lequel on enfile l'embout d'extrémité (1) sur la partie terminale (6) du support flexible (3) jusqu'à coopération entre le moyen de verrouillage (7) et une cavité (17) ménagée dans le support flexible (3) puis on déforme le dispositif de sécurisation (18) issu d'un corps (30) de l'embout d'extrémité (1) jusqu'à ce que le dispositif de sécurisation (18) couvre le moyen de verrouillage (7).

## Patentansprüche

1. Endstück (1) für einen Scheibenwischer (2) einer Scheibe eines Fahrzeugs, umfassend mindestens einen flexiblen Träger (3) und ein Blatt (4), das dazu bestimmt ist, an der Scheibe angelegt zu werden, wobei das Endstück (1) Folgendes aufweist:
- eine Aufnahme (5), die geeignet ist, ein Endteil (6) des flexiblen Trägers (3) aufzunehmen,
- mindestens ein Mittel zum Verriegeln (7) des Endteils (6) des flexiblen Trägers (3) in einer Eingriffsposition in der Aufnahme (5),
- eine Außenwand (27), die das Endstück (1) begrenzt, und eine Zugangsöffnung (44) zu dem Mittel zum Verriegeln (7),
wobei das Mittel zum Verriegeln (7) Folgendes aufweist:
- einen Abschnitt (8), der geeignet ist, einen Längsanschlag bezüglich des flexiblen Trägers (3) zu bilden,
- eine erste Fläche (46), die sich zwischen der Aufnahme (5) und der Außenwand (27) erstreckt, und
- eine zweite Fläche (47) gegenüber der Öffnung (44),
**dadurch gekennzeichnet, dass** das Mittel zum Verriegeln (7) ferner einen elastischen Arm (14) aufweist, an dessen Ende der Abschnitt (8) gebildet ist, und ein Element (9), das an der Verbindung zwischen der ersten Fläche (46) und dem Abschnitt (8) entsteht und das sich mindestens in Längsrichtung über den Abschnitt (8) hinaus erstreckt.

2. Endstück nach Anspruch 1, wobei das Element (9) einen Rand (10) bildet, der ausgebildet ist, um mindestens mit einer Längsfläche (11) des flexiblen Trägers (3) in Kontakt zu kommen.

3. Endstück nach Anspruch 2, wobei der Rand (10) durch eine Oberfläche (12) begrenzt ist, die im Wesentlichen senkrecht zu einer Fläche (13) des Abschnitts (8) ist.

4. Endstück nach einem der vorhergehenden Ansprüche, wobei der elastische Arm (14) drehend um eine Achse (16) herum beweglich ist, die sich im Wesentlichen parallel zu einer Ebene, in der sich hauptsächlich die Aufnahme erstreckt, und senkrecht zu einer Längsrichtung (L) des Endstücks (1) erstreckt.

5. Endstück nach einem der Ansprüche 4 bis 5, wobei das Mittel zum Verriegeln (7) ein "L"-förmiges Profil in einer Ebene bildet, die im Wesentlichen parallel zu einer Ebene ist, in der sich hauptsächlich die Aufnahme (5) erstreckt.

6. Scheibenwischer (2), umfassend mindestens einen flexiblen Träger (3) und ein Blatt (4), das dazu bestimmt ist, an der Scheibe angelegt zu werden, und ein Endstück (1), das eine Aufnahme (5) aufweist, die geeignet ist, ein Endteil (6) des flexiblen Trägers (3) aufzunehmen, wobei das Endstück (1) mindestens ein Mittel zum Verriegeln (7) des Endteils (6) des flexiblen Trägers (3) in einer Eingriffsposition in der Aufnahme (5) durch Zusammenwirken zwischen dem Mittel zum Verriegeln (7) und einem Hohlraum (17), der in dem flexiblen Träger (3) ausgebildet ist, aufweist,
wobei das Endstück (1) ferner eine Sicherungsvorrichtung (18) des Mittels zum Verriegeln (7), die das Verschieben des Mittels zum Verriegeln (7) aus dem Hohlraum (17) verhindert, und einen Abschnitt (8) aufweist, der einen Längsanschlag anliegend in dem Hohlraum (17) bildet, und
wobei die Sicherungsvorrichtung (18) ein Element (9) aufweist, das mit mindestens einer Längsfläche (11) des flexiblen Trägers (3) in Kontakt kommt, wobei die Längsfläche (11) einer Außenwand (27) gegenüberliegt, die das Endstück (1) begrenzt, **dadurch gekennzeichnet, dass**
das Mittel zum Verriegeln (7) eine erste Fläche (46), die sich zwischen der Aufnahme (5) und der Außenwand (27) erstreckt, eine zweite Fläche (47) gegenüber einer Zugangsöffnung (44) zu dem Mittel zum Verriegeln (7) und den Abschnitt (8) aufweist, wobei das Element (9) an der Verbindung zwischen der ersten Fläche (46) und dem Abschnitt (8) entsteht und sich mindestens in Längsrichtung über den Abschnitt (8) hinaus erstreckt, und dadurch, dass
das Mittel zum Verriegeln (7) einen elastischen Arm (14) aufweist, an dessen Ende der Abschnitt (8) und die Sicherungsvorrichtung (18) gebildet sind.

7. Scheibenwischer nach Anspruch 6, wobei das Element (9) einen Rand (10) bildet, der durch eine Oberfläche (12) begrenzt ist, die im Wesentlichen senkrecht zu einer Fläche (13) des Abschnitts (8) ist.

8. Scheibenwischer nach Anspruch 6 oder 7, wobei der elastische Arm (14) drehend um eine Achse (16) herum beweglich ist, die sich im Wesentlichen parallel zu einer Ebene, in der sich hauptsächlich die Aufnahme (5) erstreckt, und senkrecht zu einer Längsrichtung (L) des Endstücks (1) erstreckt.

9. Scheibenwischer nach einem der Ansprüche 6 bis 8, wobei die Sicherungsvorrichtung (18) eine Lasche (19) aufweist, die aus einem Körper (30) des Endstücks (1) hervorgegangen ist und die das Mittel zum Verriegeln (7) bedeckt.

10. Scheibenwischer nach Anspruch 9, wobei die Lasche (19) eine Biegung (21) am Ende von zwei Abschnitten (22, 23) aufweist, die sich jeweils in im Allgemeinen sich schneidenden Ebenen erstrecken.

11. Scheibenwischer nach einem der Ansprüche 6 bis 10, wobei die Sicherungsvorrichtung (18) mindestens einen Steg (39) aufweist, der einen Umfangsrand des Mittels zum Verriegeln (7) aufnimmt.

12. Scheibenwischsystem einer Scheibe eines Autos, umfassend einen Arm und einen Scheibenwischer (2) nach einem der Ansprüche 6 bis 11.

13. Verfahren zum Zusammenbauen eines Scheibenwischers (2), umfassend mindestens einen flexiblen Träger (3), mindestens eine Komponente (24), die auf dem flexiblen Träger (3) angebracht ist, und ein Endstück (1) nach einem der Ansprüche 1 bis 5, Verfahren, wobei das Endstück (1) auf das Endteil (6) des flexiblen Trägers (3) aufgeschoben wird, bis die Komponente (24) in Längsrichtung derart gespannt wird, dass die Sicherungsvorrichtung (18) in den Hohlraum (17) gelangt.

14. Verfahren nach Anspruch 17, wobei die Spannung derart gelockert wird, dass ein Element (9) der Sicherungsvorrichtung (18) mit mindestens einer Längsfläche (11) des flexiblen Trägers (3) in Kontakt kommt.

15. Verfahren zum Zusammenbauen eines Scheibenwischers (2), umfassend mindestens einen flexiblen Träger (3), mindestens eine Komponente (24), die auf dem flexiblen Träger (3) angebracht ist, und ein Endstück (1) nach einem der Ansprüche 1 bis 5, Verfahren, wobei das Endstück (1) auf das Endteil (6) des flexiblen Trägers (3) bis zum Zusammenwirken zwischen dem Mittel zum Verriegeln (7) und einem Hohlraum (17), der in dem flexiblen Träger (3) ausgebildet ist, aufgeschoben wird und dann die Sicherungsvorrichtung (18), die aus einem Körper (30) des Endstücks (1) hervorgegangen ist, verformt wird, bis die Sicherungsvorrichtung (18) das Mittel zum Verriegeln (7) bedeckt.

## Claims

1. End cap (1) for a wiper (2) of a window of a vehicle including at least one flexible supporting element (3) and a blade (4) designed to be applied against the window, the end cap (1) comprising:
- a seat (5) designed to receive an end portion (6) of the flexible supporting element (3),
- at least one means (7) for locking the end portion (6) of the flexible supporting element (3) in an engaged position in the seat (5),
- an outer wall (27) delimiting the cap (1) as well as an access orifice (44) to the locking means (7),
the locking means (7) including
- a portion (8) able to form a longitudinal stop facing the flexible supporting element (3),
- a first face (46) that extends between the seat (5) and the outer wall (27), and
- a second face (47) opposite the orifice (44),
**characterized in that** the locking means (7) include furthermore an elastic arm (14) at the end of which are formed the portion (8) and an element (9) that emerges at the junction between the first face (46) and the portion (8) and that extends at least longitudinally beyond the portion (8).

2. Cap according to Claim 1, in which the element (9) forms an edge (10) arranged to come into contact with at least one longitudinal face (11) of the flexible supporting element (3).

3. Cap according to Claim 2, in which the edge (10) is delimited by a surface (12) that is substantially perpendicular to a face (13) of the portion (8).

4. Cap according to one of the preceding claims, in which the elastic arm (14) is moveable in rotation about an axis (16) that extends substantially parallel to a plane in which most of the seat extends and perpendicular to a longitudinal direction (L) of the end cap (1).

5. Cap according to either one of Claims 4 or 5, in which the locking means (7) form an "L" shape in a plane substantially parallel to a plane in which most of the seat (5) extends.

6. Wiper (2) including at least one flexible supporting element (3) as well as a blade (4) designed to be applied against the window, and one end cap (1) having a seat (5) designed to receive an end portion (6) of the flexible supporting element (3), said end cap (1) having at least one means (7) for locking the end portion (6) of the flexible supporting element (3) in an engaged position in the seat (5) by cooperation between the locking means (7) and a cavity (17) formed in the flexible supporting element (3), the end cap (1) including furthermore a securing device (18) for the locking means (7) that prevents the locking means (7) from coming out of the cavity (17) and a portion (8) forming a longitudinal stop bearing against the inside of the cavity (17), and
in which the securing device (18) includes an element (9) that comes into contact with at least one longitudinal face (11) of the flexible supporting element (3), said longitudinal face (11) being opposite an outer wall (27) delimiting the end cap (1), **characterized in that**
the locking means (7) include a first face (46) that extends between the seat (5) and the outer wall (27), a second face (47) opposite an access orifice (44) to the locking means (7) and the portion (8), the element (9) emerging from the junction between the first face (46) and the portion (8) and extending at least longitudinally beyond the portion (8) and that the locking means (7) include an elastic arm (14) at the end of which are formed the portion (8) and the securing device (18).

7. Wiper according to Claim 6, in which the element (9) forms an edge (10) delimited by a surface (12) that is substantially perpendicular to a face (13) of the portion (8).

8. Wiper according to Claim 6 or 7, in which the elastic arm (14) is moveable in rotation about an axis (16) that extends substantially parallel to a plane in which most of the seat (5) extends and perpendicular to a longitudinal direction (L) of the end cap (1).

9. Wiper according to any one of Claims 6 to 8, in which the securing device (18) includes a leg (19) coming out of a body (30) of the end cap (1) and covering the locking means (7).

10. Wiper according to Claim 9, in which the leg (19) includes a fold (21) at the edge of two portions (22, 23), each of which extends along globally concurrent planes.

11. Wiper according to any one of Claims 6 to 10, in which the securing device (18) includes at least one wall (39) running alongside a peripheral edge of the locking means (7).

12. System for wiping a window of a vehicle including an arm and a wiper (2) according to any one of Claims 6 to 11.

13. Method for assembling a wiper (2) including at least one flexible supporting element (3), at least one component (24) attached to the flexible supporting element (3), and an end cap (1) according to one of the claims 1 to 5, in which method the end cap (1) is slipped onto the end portion (6) of the flexible supporting element (3) until the component (24) is stressed longitudinally, causing the securing device (18) to enter the cavity (17).

14. Method according to Claim 17, in which the stress is released, causing an element (9) of the securing device (18) to come into contact with at least one longitudinal face (11) of the flexible supporting element (3).

15. Method for assembling a wiper (2) including at least one flexible supporting element (3), at least one component (24) attached to the flexible supporting element (3), and an end cap (1) according to one of the claims 1 to 5, in which method the end cap (1) is slipped onto the end portion (6) of the flexible supporting element (3) until the locking means (7) cooperates with a cavity (17) formed in the flexible supporting element (3), then the securing device (18) coming from a body (30) of the end cap (1) is deformed until the securing device (18) covers the locking means (7).
